# EUROPÄISCHE PATENTSCHRIFT

(11) **EP 0 532 570 B1**
(45) Veröffentlichungstag und Bekanntmachung des Hinweises auf die Patenterteilung: **08.02.1995**
(21) Anmeldenummer: 91910295.4
(22) Anmeldetag: 29.05.1991
(51) Int. Cl.: C09K 7/06, C09K 7/02

(54) **FLIESSFÄHIGE BOHRLOCHBEHANDLUNGSMITTEL AUF BASIS VON KOHLENSÄUREDIESTERN**
FREE-FLOWING DRILL HOLE TREATMENT AGENTS BASED ON CARBONIC ACID DIESTERS
AGENT DE TRAITEMENT FLUIDE DE TROUS DE SONDAGE A BASE DE DIESTERS D'ACIDE CARBONIQUE

(30) Priorität: 07.06.1990 DE 4018228
(43) Veröffentlichungstag der Anmeldung: 24.03.1993
(73) Patentinhaber: Henkel Kommanditgesellschaft auf Aktien, 40191 Düsseldorf (DE)
(72) Erfinder: MÜLLER, Heinz, D-4019 Monheim (DE); HEROLD, Claus-Peter, D-4020 Mettmann (DE); WESTFECHTEL, Alfred, D-4010 Hilden (DE); VON TAPAVICZA, Stephan, D-4006 Erkrath (DE)
(86) Internationale Anmeldenummer: EP9101001
(87) Internationale Veröffentlichungsnummer: WO9118958

(56) Entgegenhaltungen:
- EP-A- 0 374 671
- EP-A- 0 374 672
- EP-A- 0 386 636
- EP-A- 0 386 638
- EP-A- 0 391 252
- EP-A- 0 398 113

## Beschreibung

Die Erfindung beschreibt neue, unter Normalbedingungen fließfähige Bohrlochbehandlungsmittel, die unter Mitverwendung einer Ölphase zusammengesetzt sind. Als charakteristisches Beispiel für Behandlungsmittel dieser Art wird im nachfolgenden die Erfindung anhand von Bohrspülflüssigkeiten und darauf aufgebauten Bohrspülschlämmen beschrieben. Das Anwendungsgebiet der erfindungsgemäßen Abwandlung von Hilfsflüssigkeiten der hier betroffenen Art ist jedoch nicht darauf beschränkt. In Betracht kommen insbesondere auch die Gebiete der Spotting Fluids, Spacer, Hilfsflüssigkeiten für Workover und Stimulierung und für das Fracturing.

Betroffen sind durch die Erfindung dabei sowohl Hilfsflüssigkeiten der genannten Art, die ölbasiert sind, d. h. mit einer geschlossenen Ölphase arbeiten als auch Hilfsmittel, in denen die Ölphase in einer insbesondere wäßrigen geschlossenen Phase emulgiert ist. Bohrspülflüssigkeiten bzw. darauf aufgebaute Bohrspülschlämme sind hier charakteristische Beispiele der unterschiedlichen Möglichkeiten.

Bekannt sind einerseits Wasser-basierte Bohrspülungen mit einem Gehalt an etwa 1 bis 50 % emulgierter Ölphase - neben den anderen üblichen Hilfsstoffen einer solchen Bohrspülung - die als Emulsionsspülungen bezeichnet werden. Auf der anderen Seite sind in breitem Umfang Öl-basierte Spülungssysteme im praktischen Einsatz, bei denen das Öl die fließfähige Phase oder doch wenigstens den überwiegenden Anteil der fließfähigen Phase bildet. Besondere Bedeutung haben hier die sogenannten Invert-Bohrspülschlämme, die auf der Basis von W/O-Emulsionen eine disperse wäßrige Phase in der geschlossenen Ölphase enthalten. Der Gehalt an disperser wäßriger Phase liegt üblicherweise im Bereich von etwa 5 bis 50 Gew.-%. Die Erfindung betrifft in gleicher Weise die beiden hier dargestellten Gebiete der Öl-basierten Spülungssysteme wie die Wasser-basierten Spülungssysteme auf Emulsionsbasis.

Der Einsatz der neuen fließfähigen Bohrlochbehandlungsmittel hat besondere Bedeutung für die Erschließung von Erdöl und Erdgas, insbesondere im marinen Bereich, ist aber nicht darauf eingeschränkt. Die neuen Systeme können allgemein Verwendung auch bei landgestützten Bohrungen finden, beispielsweise beim Geothermiebohren, beim Wasserbohren, bei der Durchführung geowissenschaftlicher Bohrungen und bei Bohrungen im Bergbaubereich.

### Zum Stand der Technik

Flüssige Spülsysteme zur Niederbringung von Gesteinsbohrungen unter Aufbringen des abgelösten Bohrkleins sind bekanntlich beschränkt eingedickte, fließfähige Systeme, die einer der drei folgenden Klassen zugeordnet werden können:
Rein wäßrige Bohrspülflüssigkeiten, Bohrspülsysteme auf Ölbasis, die in der Regel als sogenannte Invert-Emulsionsschlämme eingesetzt werden sowie die Wasser-basierten O/W-Emulsionen, die in der geschlossenen wäßrigen Phase eine heterogene feindisperse Ölphase enthalten.

Bohrspülungen auf geschlossener Ölbasis sind im allgemeinen als Drei-Phasen-System aufgebaut: Öl, Wasser und feinteilige Feststoffe. Die wäßrige Phase ist dabei heterogen fein-dispers in der geschlossenen Ölphase verteilt. Es ist eine Mehrzahl von Zusatzstoffen vorgesehen, insbesondere Emulgatoren, Beschwerungsmittel, fluid-loss-Additive, Alkalireserven, Viskositätsregler und dergleichen. Zu Einzelheiten wird beispielsweise verwiesen auf die Veröffentlichung P. A. Boyd et al. "New Base Oil Used in Low-Toxicity Oil Muds" Journal of Petroleum Technology, 1985, 137 bis 142 sowie R. B. Bennett "New Drilling Fluid Technology - Mineral Oil Mud" Journal of Petroleum Technology, 1984, 975 bis 981 sowie die darin zitierte Literatur.

Bohrspülflüssigkeiten auf Basis Wasser-basierter O/W-Emulsionssysteme nehmen in ihren Gebrauchseigenschaften eine Zwischenstellung ein zwischen den rein wäßrigen Systemen und den Öl-basierten Invertspülungen. Ausführliche Sachinformationen finden sich hier in der einschlägigen Fachliteratur, verwiesen sei beispielsweise auf das Fachbuch George R. Gray und H.C.H. Darley, "Composition in Properties of Oil Well Drilling Fluids", 4. Auflage, 1980/81, Gulf Publishing Company, Houston und die umfangreiche darin zitierte Sach- und Patentliteratur sowie das Handbuch "Applied Drilling Engineering", Adam T. Bourgoyne, Jr. et al., First Printing Society of Petroleum Engineers, Richardson, Texas (USA).

Die Ölphasen von Bohrspülungen der hier geschilderten Art und vergleichsweise aufgebauten anderen Bohrlochbehandlungsmittel werden in der Praxis heute nahezu ausschließlich durch Mineralölfraktionen gebildet. Damit ist eine nicht unbeträchtliche Belastung der Umwelt verbunden, wenn beispielsweise die Bohrschlämme unmittelbar oder über das erbohrte Gestein in die Umwelt gelangen. Mineralöle sind nur schwer und anaerob praktisch nicht abbaubar und damit als langfristige Verschmutzung anzusehen.

Aus jüngerer Zeit bestehen einige Vorschläge zur Minderung dieser Problematik. So beschreiben die US-Patentschriften 4,374,737 und 4,481,121 Öl-basierte Invert-Bohrspülflüssigkeiten, in denen sogenannten nonpolluting oils Verwendung finden sollen. Als nonpolluting oils werden nebeneinander und gleichwertig aromatenfreie Mineralölfraktionen sowie Esteröle pflanzlichen und tierischen Ursprungs benannt. Bei diesen Esterölen handelt es sich um Triglyceride natürlicher Fettsäuren, die bekanntlich eine hohe Umweltverträglichkeit besitzen und gegenüber Kohlenwasserstoff-Fraktionen aus ökologischen Überlegungen deutliche Überlegenheit besitzen.

Die Anmelderin beschreibt in einer größeren Zahl älterer Anmeldungen Vorschläge zum Austausch der Mineralölfraktionen gegen ökologisch verträgliche leicht abbaubare Ölphasen. Dabei werden drei unterschiedliche Typen von Austauschölen dargestellt, die auch in Mischung miteinander eingesetzt werden können. Es handelt sich hierbei um ausgewählte oleophile Carbonsäureester, um wenigstens weitgehend wasserunlösliche unter Arbeitsbedingungen fließfähige Alkohole und um entsprechende Ether. Summarisch wird hier verwiesen auf die älteren Anmeldungen P 38 42 659.5 (D 8523), P 38 42 703.6 (D 8524), P 39 07 391.2 (D 8606), P 39 07 392.0 (D 8607), P 39 03 785.1 (D 8543), P 39 03 784.3 (D 8549), P 39 11 238.1 (D 8511) und P 39 11 299.3 (D 8539). Alle hier genannten älteren Anmeldungen betreffen das Gebiet Öl-basierter Bohrspülsysteme, insbesondere vom W/O-Inverttyp. Wasser-basierte Emulsionsspülungen unter Verwendung von Ölphasen erhöhter Abbaubarkeit werden beschrieben in den älteren Anmeldungen P 39 15 876.4 (D 8704), P 39 15 875.6 (D 8705) und P 39 16 550.7 (D 8714).

### Die Aufgabe der Erfindung und ihre technische Lösung

Die Erfindung geht von der Aufgabe aus, in Bohrlochbehandlungsmitteln der hier betroffenen Art als Ölphase wenigstens anteilsweise eine Stoffklasse einzusetzen, deren Verwendung bisher für dieses Anwendungsgebiet nicht beschrieben worden ist. Die Erfindung will dabei gleichzeitig im Sinne der Zielvorstellungen der genannten zahlreichen älteren Anmeldungen eine Ölphase zur Verfügung stellen, die sich durch hervorragende ökologische Verträglichkeit bei gleichzeitig guten - gegebenenfalls gegenüber bisherigen Ölphasen sogar verbesserten - Gebrauchseigenschaften im jeweiligen Anwendungsfall auszeichnet.

Die erfindungsgemäße Lehre geht von der Erkenntnis aus, daß ausgewählte Diester der Kohlensäure hervorragende Austauschöle im Sinne der erfindungsgemäßen Aufgabenstellung sind. Diese Kohlensäurediester können dabei die jeweilige Ölphase als Ganzes bilden, sie können aber auch in Abmischung mit anderen Ölen, insbesondere aus der Klasse der sogenannten nonpolluting oils eingesetzt werden. Als Mischungskomponenten besonders geeignet sind Carbonsäureesteröle, oleophile Alkohole und/oder Ether aus den zuvor erwähnten älteren Anmeldungen der Anmelderin.

Gegenstand der Erfindung ist dementsprechend in einer ersten Ausführungsform die Verwendung von oleophilen Diestern der Kohlensäure mit gleichen oder verschiedenen öllöslichen und ökologisch verträglichen monofunktionellen und gegebenenfalls mehrfunktionellen Alkoholen als Bestandteil von Öl- oder Wasser-basierten Bohrspülungen und anderen fließfähigen Bohrloch-Behandlungsmitteln.

Eine erste Ausführungsform dieser Darstellung der Erfindung ist dadurch gekennzeichnet, daß die oleophilen Kohlensäurediester in der Ölphase von Öl-basierten Spülungen, insbesondere Invertspülungen vom W/O-Typ zum Einsatz kommen und dabei entweder als Zuschlagsstoff geringerer Konzentration in der geschlossenen Ölphase vorliegen, vorzeigsweise hier aber den wenigstens überwiegenden Teil der Ölphase ausmachen.

In einer zweiten bevorzugten Ausführungsform kommen die oleophilen Kohlensäurediester in Wasser-basierten Emulsionsspülungen vom O/W-Typ zum Einsatz. Auch hier liegen sie in der dispersen Ölphase wenigstens in geringerer Konzentration vor, machen aber in einer besonders geeigneten Ausführungsform den wenigstens überwiegenden Anteil dieser Phase aus.

Die Erfindung betrifft in einer weiteren Ausführungsform die im Temperaturbereich von 5 bis 20 °C fließ- und pumpfähigen Bohrlochbehandlungsmittel, insbesondere Bohrspülungen auf Basis
- entweder einer geschlossenen Ölphase, gewünschtenfalls in Abmischung mit einer beschränkten Menge einer dispersen wäßrigen Phase (W/O-Invert-Typ)
- oder einer dispersen Ölphase in einer geschlossenen wäßrigen Phase (O/W-Emulsions-Typ)
wobei das Kennzeichen dieser Ausgestaltung der Erfindung darin liegt, daß diese Bohrlochbehandlungsmittel in ihrer Ölphase oleophile Kohlensäurediester auf Basis öllöslicher und ökologisch verträglicher monofunktioneller Alkohole und gewünschtenfalls Wasser- und/oder Öl-loslicher mehrwertiger Alkohole enthalten.

Für diese hier geschilderten Ausführungsformen der erfindungsgemäßen Lehre gilt weiterhin, daß in den Bohrlochbehandlungsmitteln die üblichen gelösten und/oder dispergierten Hilfsstoffe wie Viskositätsregler, Emulgatoren, fluid-loss-Additive, Netzmittel, feinteilige Beschwerungsstoffe, Salze, Alkalireserven und/oder Biozide enthalten sein können. Erfindungsgemäß gilt dabei die zusätzlich bevorzugte Maßnahme, daß überwiegend solche anorganischen und/oder organischen Hilfs- und Zuschlagsstoffe mitverwendet werden, die ökologisch und toxikologisch wenigstens weitgehend unbedenklich sind.

### Die Ausgestaltung der Erfindung in ihren Einzelheiten und bevorzugten Ausführungsformen

Oleophile öllösliche Kohlensäurediester, ihre Herstellung und ihre Anwendung auf verschiedenartigen Gebieten sind Gegenstand zahlreicher druckschriftlicher Veröffentlichungen. So werden in der EP-A1 0 089 709 Schmiermittelgemische auf Basis von Diestern höherer Alkohole beschrieben, wobei bevorzugte Molgewichte der zur Veresterung eingesetzten Alkohole im Bereich von etwa 100 bis 270 liegen. In dieser Literaturstelle werden auch Möglichkeiten zur Herstellung entsprechender Kohlensäurediester unter Verweis auf die einschlägige Literatur (Ital. Patent 898077 und Brit. Patent 1574188) beschrieben. Die Herstellung von Kohlensäurediestern monofunktioneller Alkohole ausgehend von Alkylencarbonaten ist beispielsweise beschrieben in der US-PS 3,642,858. Die als Ausgangsmaterial eingesetzten Alkylencarbonate sind die Kohlensäureester niederer Diole mit vicinalen Hydroxylgruppen. Die DE-AS 12 42 569 schildert die Verwendung von neutralen Kohlensäureestern monofunktioneller Alkohole mit jeweils 4 bis 22 Kohlenstoffatomen im Alkoholrest als schaumdämpfende Mittel. Zur Herstellung dieser Kohlensäurediester wird auf literaturbekannte Verfahren verwiesen, wie sie z. B. in Houben-Weyl, Methoden der organischen Chemie, O. Thieme Verlag Stuttgart. Band 8, Seite 106 (4. Auflage 1952) beschrieben sind. Andererseits ist es aber auch wieder bekannt, Kohlensäureester durch Einbau von hydrophilen und hydrophoben Gruppen im Molekül so zu modifizieren, daß die anfallenden Verbindungen als biologisch abbaubare nichtionische oberflächenaktive Komponenten Einsatz finden können, vgl. hierzu beispielsweise US-PS 4,504,418.

Nicht beschrieben und nicht bekannt ist die Verwendung bzw. Mitverwendung der erfindungsgemäß ausgewählten Ester auf Kohlensäurebasis bei der Ausbildung der Ölphase in Bohrlochbehandlungsmitteln der beschriebenen Art. Wie die Anmelderin festgestellt hat, eignet sich diese Stoffklasse aber ganz besonders für den hier betroffenen Einsatzzweck. Kohlensäurediester zeigen für den hier betroffenen Einsatzzweck ein ausgewogenes Verhältnis von Hydrolysestabilität und Hydrolyseinstabilität. Die Verbindungen sind hinreichend stabil, um unter den Rahmenbedingungen der hier betroffenen Arbeitsmittel erfolgreich eingesetzt werden zu können. Bei Lagerung unter Umgebungseinfluß - insbesondere im marinen Ökosystem - unterliegen Diester dann aber doch dem biologischen Abbau, wobei die Verträglichkeit des Esters durch die hier eingesetzten Alkohole bestimmt ist. Es ist dementsprechend erfindungsgemäß möglich, eine optimale Abstimmung von Gebrauchseigenschaften und Biokompatibilität zu erreichen.

Im Sinne der erfindungsgemäßen Definition umfaßt der Begriff der Kohlensäurediester sowohl die entsprechenden Verbindungen im engeren Wortsinn, die einen Kohlensäurerest aufweisen, an den zwei Alkoholreste in esterartiger Form gebunden sind. In den Rahmen der erfindungsgemäßen Definition solcher Kohlensäurediester fallen aber auch entsprechende oligomere Verbindungen, in denen eine Mehrzahl von Kohlensäureresten in einem Molekül gebunden sind, dabei jeder Kohlensäurerest in Form des Diesters eingebunden ist. Entsprechende oligomere Verbindungen werden erhalten, wenn zusammen mit monofunktionellen Alkoholen mehrwertige Alkohole zum Einsatz kommen und dabei wenigstens 2 Hydroxylgruppen dieser mehrwertigen Alkohole in Interaktion mit unterschiedlichen Kohlensäuremolekülen treten. Wesentlich ist auch für diese Ausführungsform die Mitverwendung von monofunktionellen Alkoholen, so daß letztlich für jeden Kohlensäurerest die Einbindung als Diester gewährleistet ist. Oleophile oligomere Kohlensäurediester der hier zuletzt geschilderten Art enthalten für den erfindungsgemäßen Einsatzzweck nicht mehr als 10 Kohlensäurereste pro Molekül, wobei die bevorzugte Obergrenze im Mittel bei etwa 5 Kohlensäureresten pro Molekül liegt. Besonders geeignete oligomere Kohlensäurediester im Sinne der Erfindung enthalten im Mittel 2 oder 3 Kohlensäurereste pro Molekül.

Der Begriff der Kohlensäurediester umfaßt im Sinne der erfindungsgemäßen Definition weiterhin bestimmt ausgewählte symmetrische Diester - beispielsweise als Umsetzungsprodukte zwischen Kohlensäure und einem bestimmt ausgewählten öllöslichen monofunktionellen Alkohol - ebenso aber auch entsprechende unsymmetrische Ester, die unterschiedliche Alkohole an den Kohlensäurerest gebunden enthalten. Erfaßt werden durch diesen Begriff schließlich aber auch beliebige Mischungen von symmetrischen und/oder unsymmetrischen - monomeren und/oder oligomeren - Kohlensäurediestern, wie sie beispielsweise als statistisches Gemisch bei der Umsetzung mit einem Gemisch von wenigstens 2 monofunktionellen Alkoholen, gegebenenfalls unter Mitverwendung von mehrwertigen Alkoholen, anfallen.

Übereinstimmend gilt für alle Verbindungen bzw. Verbindungsgemische der hier gegebenen Definition, daß es sich um oleophile Kohlensäurediester handelt, die nur eine geringe Restlöslichkeit in Wasser besitzen. In der Regel liegt die Löslichkeit dieser Diester im Temperaturbereich von 0 bis 20 °C bei höchstens etwa 1 Gew.-%, vorzugsweise liegt die Löslichkeit deutlich darunter, beispielsweise bei höchstens 0,5 oder gar bei höchstens etwa 0,1 Gew.-%. Übereinstimmend zeichnen sich die erfindungsgemäß einzusetzenden Kohlensäurediester durch ihre Flammpunktscharakteristik aus. Der Flammpunkt der erfindungsgemäß verwendeten oleophilen Diester soll bei mindestens 80 °C, vorzugsweise bei mindestens 100 °C liegen. Es kann aus Gründen der praktischen Betriebssicherheit wünschenswert sein, höhere Grenzwerte des Flammpunktes für die Ölphase einzusetzen, so daß Flammpunkte im Bereich von mindestens etwa 135 °C und insbesondere von wenigstens etwa 150 °C besondere praktische Bedeutung haben können.

Ein weiteres übereinstimmendes Element für die Beschaffenheit der erfindungsgemäß einzusetzenden Kohlensäurediester ist die Forderung nach ökologischer Verträglichkeit. Diese Bedingung wird letztlich durch die zur Veresterung eingesetzten Alkohole sichergestellt. Hier gilt das folgende:
Der Begriff der ökologischen Verträglichkeit erfaßt einerseits die biologische Abbaubarkeit im jeweils betroffenen Ökosystem, bei See-gestützten Bohrungen insbesondere also im marinen Ökosystem. Daneben verdient aber eine weiterführende Überlegung insbesondere bei der Auswahl geeigneter monofunktioneller Alkohole Beachtung. Hier ist zu berücksichtigen, daß im praktischen Einsatz der erfindungsgemäßen Ölphasen in Abmischung mit wäßrigen Phasen, insbesondere unter den im Bohrloch auftretenden erhöhten Temperaturen, partielle Esterspaltungen unter Ausbildung entsprechender Anteile der freien Alkohole auftreten können. Der freie Alkohol liegt dann in Abmischung mit den restlichen Bestandteilen der Ölphase vor. Hier kann es wichtig sein, daß die freien Alkohole so ausgewählt werden, daß inhalations-toxische Belastungen der Mannschaft auf der Bohrstelle mit Sicherheit ausgeschlossen werden. Der hier angesprochene Problemkreis betrifft vor allem die mitverwendeten monofunktionellen Alkohole, mehrfunktionelle Alkohole zeigen auch in ihren niedrigsten Gliedern derart geringe Werte der Flüchtigkeit, daß für das praktische Arbeiten die erforderliche Sicherheit von vorneherein gegeben ist.

Zur Kohlensäurediester-Bildung geeignete monofunktionelle Alkohole sind insbesondere öllösliche Verbindungen dieser Art mit wenigstens 5, vorzugsweise wenigstens 6 C-Atomen. Eine Obergrenze der Kohlenstoffzahl leitet sich praktisch nur aus Überlegungen zur Zugänglichkeit entsprechender Monoalkohole ab. Aus praktischen Gründen liegt sie bei etwa 40 C-Atomen. Monofunktionelle Alkohole des Bereichs C₈₋₃₆ und insbesondere C₈₋₂₄ können besonders geeignet sein. Diese Alkoholkomponenten sind vorzugsweise frei von aromatischen Molekülbestandteilen und enthalten insbesondere geradkettige und/oder verzweigte Kohlenwasserstoffketten natürlichen und/oder synthetischen Ursprungs. Die entsprechenden Alkohole und insbesondere solche Alkohole einer höheren C-Zahl, beispielsweise von C₁₆₋₂₄ können dabei auch wenigstens anteilsweise 1-fach oder auch mehrfach olefinisch ungesättigt sein. Der Einbau olefinischer Doppelbindungen beeinflußt in bekannter Weise die Rheologie entsprechender Diester im Sinne erhöhter Fließfähigkeit auch bei niedrigeren Temperaturen. Davon kann erfindungsgemäß Gebrauch gemacht werden. Verbunden damit ist dann allerdings eine gewisse Oxidationsanfälligkeit im praktischen Betrieb, die gegebenenfalls die Mitverwendung von stabilisierenden Antioxidantien und gegebenenfalls zusätzlich synergistisch wirkenden Hilfsstoffen erfordert. Die Absenkung hoher Rheologie auch in niedrige Temperaturbereiche wird insbesondere durch den Einsatz von verzweigten Kohlenwasserstoffketten gefördert. Hier kann durch geeignete Abstimmung ein Optimum an ökologischer Verträglichkeit und rheologischen Daten der Ölphase für den jeweils geforderten Einsatzzweck gefunden werden. Die Rheologie der Kohlensäurediester kann dabei zusätzlich durch den Einsatz von Alkoholgemischen gesteuert werden. Auf diese Weise ist es durchaus möglich, Kohlensäurediester ausschließlich auf Basis von geradkettigen Fettalkoholen natürlichen Ursprungs des Bereichs von C₆₋₁₈, insbesondere des Bereichs von wenigstens überwiegend C₈₋₁₄ selbst dann einzusetzen, wenn an das Material auf Kohlensäurediesterbasis hohe Anforderungen an gute Rheologie auch bei niederen Temperaturen gestellt werden.

Durch wenigstens anteilsweisen Einsatz von verzweigtkettigen monofunktionellen Alkoholen, beispielsweise entsprechenden Synthesealkoholen oder aus der Oligomerisierung von geradkettigen Einsatzmaterialien natürlichen Ursprungs, können hoch bewegliche Kohlensäurediester bis zu hohen C-Zahlen des angegebenen Bereichs erhalten werden.

Auch die gegebenenfalls mitverwendeten mehrwertigen Alkohole umfassen einen breiten Bereich der C-Zahl im Molekül. Geeignet sind insbesondere entsprechende mehrwertige Alkohole mit 2 bis 40 C-Atomen. Die bei der Ausbildung der Kohlensäurediester mitverwendeten mehrwertigen Alkohole können wasserlöslich und/oder öllöslich sein. Auch in Form ihrer niedrigsten Glieder, beispielsweise im Fall des Ethylenglykols, besitzen sie keine hohe Flüchtigkeit. Sie sind allgemein toxikologisch und insbesondere inhalations-toxikologisch unbedenklich. Bevorzugt sind polyfunktionelle Alkohole mit bis zu 5 Hydroxylgruppen, vorzugsweise mit 2 und/oder 3 Hydroxylgruppen, als esterbildende Bestandteile der Ölphase auf Basis Kohlensäurediester.

Polyfunktionelle Alkohole können dabei in verschiedener Form in die spezielle Struktur der erfindungsgemäß eingesetzten Ölphase auf Basis von Kohlensäurediestern eingebunden sein. In Betracht kommen insbesondere 3 Strukturtypen:
Der polyfunktionelle Alkohol kann als Hydroxylgruppen-terminierter Esterrest an die Kohlensäure gebunden vorliegen. Der polyfunktionelle Alkohol kann aber auch unter Ausbildung von Ethergruppierungen als Kettenverlängerung Bindeglied zwischen dem Kohlensäurerest und den veresternden monofunktionellen Alkoholen sein. Schließlich kann der Einsatz der mehrwertigen Alkohole zur Ausbildung der oligomeren Kohlensäurediester führen. Dies ist insbesondere dann möglich, wenn die Hydroxylgruppen des mehrwertigen Alkohols so weit voneinander entfernt sind, daß die Ausbildung von 5- bzw. 6-Ringen mit nur einem Kohlensäurerest nicht möglich ist.

Gerade auf dem Gebiet der oligomeren Kohlensäurediester zeigt sich, daß gute rheologische Eigenschaften auch bei vergleichsweise hohen Molekulargewichten einstellbar sind. So fällt beispielsweise ein bei Raumtemperatur flüssiges komplexes Kohlensäurediestergemisch an, wenn ein aus Dimerfettsäuren erhaltenes Diol mit statistisch 36 C-Atomen zusammen mit 2 Äquivalenten Isotridecylalkohol als monofunktionelle Komponente und 2 Äquivalenten Kohlensäure zur Reaktion gebracht werden.

Gute rheologische Daten, insbesondere auch bei niederen Temperaturen, werden aber nicht nur durch komplexe Alkohol- bzw. Stoffgemische eingestellt, auch der Einsatz definierter monofunktioneller Alkohole kann zu oleophilen Kohlensäurediestern führen, die den erfindungsgemäßen vielgestaltigen Anforderungen sehr gut entsprechen. Als Beispiel seien hier die Synthesealkohole 2-Ethylhexylalkohol und Isotridecylalkohol genannt. Di-2-Ethylhexyl-carbonat besitzt beispielsweise einen Fließpunkt von - 56,6 °C und einen Flammpunkt von 154 °C. Eine inhalationstoxikologische Belastung ist beim Einsatz dieses Kohlensäurediesters ebensowenig zu befürchten wie bei den vergleichbaren symmetrischen Kohlensäurediestern mit Alkoholen höherer Kohlenstoffzahl, beispielsweise dem Di-Isotridecyl-carbonat.

Insbesondere für den Einsatz bei vergleichsweise hohen Arbeitstemperaturen - beispielsweise bei der Verwendung in hinreichend tiefen Bohrungen, in denen Bohrlochtemperaturen von wenigstens 120 bis 150 °C eingestellt werden, kann der Einsatz der Kohlensäurediester als Ölphase wichtige Vorteile bringen. Verbindungen dieser Art zeigen im allgemeinen eine hohe Temperaturstabilität, die beispielsweise bis 300 °C befriedigende Werte aufweist. In an sich bekannter Weise kann hier durch Auswahl der geeigneten Alkoholkomponenten Einfluß auf die Temperaturstabilität genommen werden.

Auf die folgende Besonderheit in Zusammenhang mit der Mitverwendung polyfunktioneller Alkohole sei ausdrücklich verwiesen: Durch den gezielten Einbau von insbesondere niederen 2- und/oder 3-wertigen Alkoholen kann Einfluß auf den HLB-Wert der Ölphase und damit auf ihre Fähigkeit zur Aufnahme und Stabilisierung einer dispersen wäßrigen Phase einerseits bzw. zu ihrer Dispergierung als disperse Ölphase in einer geschlossenen wäßrigen Phase genommen werden. Auf diesem Weg wird es möglich, den Einsatz der bis heute notwendigen Emulgatoren nach Art und/oder Menge zu steuern und zu reduzieren, so daß gewünschtenfalls auf die Mitverwendung von Emulgatoren sogar ganz verzichtet werden kann. Die Erfindung eröffnet hier wichtige Möglichkeiten für den Einsatz ökologisch deutlich verbesserter Arbeitsmittel.

Die jeweilige bestimmte Beschaffenheit der eingesetzten Kohlensäurediester und insbesondere ihre Rheologie kann in weitem Rahmen schwanken. Ersichtlich wird das an der folgenden Überlegung: Wird der Kohlensäurediester als Hauptkomponente in Öl-basierten Systemen eingesetzt, dann ist die gleichzeitige Absicherung guter rheologischer Eigenschaften auch bei niedrigen Temperaturen in der Regel notwendig. In diesem Fall sollten Fließ- und Stockpunkt unterhalb 0 °C und vorzugsweise unter - 5 °C liegen, wobei niedrigere Werte - z. B. solche unterhalb - 10 °C oder auch unterhalb - 15 °C - besonders vorteilhaft sein können. Die Brookfield(RVT)-Viskosität bei 0 bis 5 °C soll hier in bevorzugten Systemen nicht oberhalb 55 mPas und vorzugsweise nicht oberhalb 45 mPas liegen.

Wird andererseits der Kohlensäurediester als disperse Phase in Wasser-basierten Emulsionssystemen eingesetzt, dann können sehr viel geringere Ansprüche an die Fließfähigkeit des speziellen Kohlensäurediesters gestellt werden. So können Fließ- und Stockpunkt oberhalb 0 °C liegen. Zweckmäßig kann es allerdings sein, hier entsprechende Werte wenigstens im Bereich etwa der Raumtemperatur vorzusehen. Die Brookfield(RVT)-Viskosität bei 20 °C kann hier im Bereich bis etwa 2 Mio. mPas oder auch noch darüber, vorzugsweise im Bereich bis etwa 1 Mio. mPas liegen.

Daß gerade in dieser Ausführungsform vergleichsweise schwer bewegliche Kohlensäurediester wirkungsvolle Hilfsmittel sein können, geht beispielsweise aus der nachfolgenden Überlegung hervor: Die disperse Ölphase in Wasser-basierten Emulsionssystemen hat eine Mehrzahl von technischen Funktionen zu erfüllen, unter anderem dient sie der Schmierung. Dabei können schon vergleichsweise geringe Mengen einer entsprechenden dispersen Ölphase - beispielsweise etwa 1 bis 8 Gew.-% dispergierte Ölphase - solche Wasser-basierten Emulsionsspülungen substantiell verbessern. Es fällt in den Rahmen der Erfindung, entsprechende Vertreter auf Basis der Kohlensäurediester - die ja gerade unter anderem als überlegene Schmiermittel bekannt sind - in dieser hier angedeuteten Form einzusetzen.

Die Frage der Eigenviskosität des jeweils eingesetzten Kohlensäurediestermaterials verliert auch dann an Bedeutung, wenn diese erfindungsgemäß definierten Materialien in Abmischung mit anderen Ölphasen zum Einsatz kommen. Insbesondere gilt das, wenn die Kohlensäurediester in der die Ölphase bildenden Abmischung untergeordnete Mengen sind und hier bestimmte Eigenschaften in bestimmter Weise ausgestalten, beispielsweise eine erhöhte Schmierfähigkeit sicherstellen, ohne die Rheologie des Gesamtsystems entscheidend zu beeinflussen.

### Mögliche Mischungskomponenten für die Ölphase

Zur Abmischung im Rahmen der Erfindung geeignete Ölkomponenten sind zunächst einmal die in der heutigen Praxis der Bohrspülungen eingesetzten Mineralöle und dabei bevorzugt im wesentlichen aromatenfreie aliphatische und/oder cycloaliphatische Kohlenwasserstoff-Fraktionen. Auf den einschlägigen druckschriftlichen Stand der Technik und die auf dem Markt befindlichen Handelsprodukte wird verwiesen.

Besonders wichtige Mischungskomponenten sind allerdings im Sinne des erfindungsgemäßen Handelns umweltverträgliche oleophile Alkohole, entsprechende Ether und/oder Esteröle, wie sie im einzelnen in den eingangs genannten älteren Anmeldungen der Anmelderin ausführlich beschrieben sind. Der Gegenstand dieser älteren Anmeldungen wird hiermit ausdrücklich auch zum Offenbarungsinhalt der vorliegenden Erfindungsbeschreibung gemacht, wobei im nachfolgenden nur auf einige wesentliche Gesichtspunkte dieser älteren technischen Lehren verwiesen wird.

Den oleophilen Mischungskomponenten auf Basis Alkohole, Ether und/oder Carbonsäureester können den überwiegenden Teil der Ölphase ausmachen. Kohlensäurediester im erfindungsgemäßen Sinne werden dann zur Einstellung bestimmter Stoffeigenschaften mitverwendet. In der Regel wird hier die Menge des Kohlensäurediesters aber immerhin einige Gew.-% der Ölphase, beispielsweise wenigstens etwa 5 Gew.-% ausmachen. Oleophile Alkohole können als Hydrolyse-stabile Hauptkomponente der Ölphase für zahlreiche Einsatzzwecke interessant sein, häufig zeigen solche Alkohole jedoch unzureichende Schmierfähigkeit. Kohlensäurediester der erfindungsgeäßen Definition sind aus dem einschlägigen Stand der Technik demgegenüber als wirkungsvolle Schmiermittel bekannt. So kann es also beispielsweise zweckmäßig sein, gemischte Ölphasen mit einem Gehalt von wenigstens etwa 10 Gew.-% des Kohlensäurediesters, insbesondere etwa 15 bis 50 Gew.-% des Kohlensäurediesters einzusetzen. Insbesondere bei Arbeitsbedingungen, die verringerten hydrolytischen Angriff bedingen, beispielsweise also bei ölbasierten Spülungen und dabei auch solchen vom W/O-Inverttyp kann der überwiegende oder gar der alleinige Einsatz der Kohlensäruediester besonders zweckmäßig sein. Mengenverhältnisse von etwa 50 bis 95 Gew.-% der Ölphase sind für gemischte Ölphasen der hier betroffenen Art charakteristisch.

Zur chemischen Natur der eingesetzten Mischungskomponenten auf Basis oleophiler Alkohole, Ether und/oder Carbonsäureester wird auf die Angaben der älteren Anmeldungen verwiesen und dabei insbesondere zu den oleophilen Alkoholen auf die eingangs erwähnte Anmeldung P 39 11 238.1 (D 8511) sowie zu den oleophilen Ethern auf die ältere Anmeldung P 39 11 299.3 (D 8539).

Geeignete Carbonsäureester als Mischungskomponente sind im einzelnen in den älteren Anmeldungen P 38 42 659.5 (D 8523), P 38 42 703.6 (D 8524), P 39 07 391.2 (D 8606) und P 39 07 392.0 (D 8607) beschrieben.

Wichtig ist, daß auch alle diese Zusatzstoffe Flammpunkte von wenigstens 80 °C und bevorzugt von wenigstens 100 °C besitzen, wobei substantiell darüberliegende Werte, beispielsweise solche oberhalb 150 °C besonders geeignet sein können. Wichtig ist für die optimale Nutzung der erfindungsgemäßen Zielsetzung weiterhin die Forderung, daß diese Alkohole, Ether und/oder Esteröle eine biologisch bzw. ökologisch verträgliche Konstitution aufweisen und insbesondere auch unter Berücksichtigung einer partiellen Hydrolyse inhalations-toxikologisch unbedenklich sind. Im einzelnen gelten sinngemäß die zuvor zu den Kohlensäurediestern bzw. den hier eingesetzten Alkoholkomponenten angestellten Überlegungen.

Auch zu den durch Partialhydrolyse mitverwendeter Carbonsäureesteröle gebildeten Carbonsäuren bedarf es einiger Hinweise. Hier können in Abhängigkeit von der speziellen Konstitution der eingesetzten Carbonsäuren 2 grundsätzliche Typen - mit fließendem Übergang - unterschieden werden: Carbonsäuren, die zu Carbonsäuresalzen mit Emulgatorwirkung oder zu Inertsalzen führen. Entscheidend ist hier insbesondere die jeweilige Kettenlänge des frei werdenden Carbonsäuremoleküls. Zu berücksichtigen ist weiterhin das gewöhnlich über die Alkalireserve der Bohrspülung vorliegende salzbildende Kation. Allgemein gelten hier die folgenden Regeln:
Niedere Carbonsäuren, beispielsweise solche mit 1 bis 5 C-Atomen, führen zur Bildung von Inertsalzen, beispielsweise zur Bildung entsprechender Acetate oder Propionate. Fettsäuren höherer Kettenlänge und insbesondere solche des Bereichs von C₁₂₋₂₄ führen zu Verbindungen mit Emulgator-Wirkung. Nähere Einzelheiten finden sich in den angegebenen älteren Anmeldungen zu Carbonsäureesterölen als oleophile Phase in Bohrspülungen vom W/O-Typ bzw. vom O/W-Typ.

Werden oleophile Carbonsäureesteröle als Mischungskomponente mitverwendet, so fallen sie erfindungsgemäß bevorzugt in wenigstens eine der nachfolgenden Unterklassen:
a) Ester aus C₁₋₅-Monocarbonsäuren und 1- und/oder mehrfunktionellen Alkoholen, wobei Reste aus 1-wertigen Alkoholen wenigstens 6, bevorzugt wenigstens 8 C-Atome aufweisen und die mehrwertigen Alkohole bevorzugt 2 bis 6 C-Atome im Molekül besitzen,
b) Ester aus Monocarbonsäuren synthetischen und/oder natürlichen Ursprungs mit 6 bis 16 C-Atomen, insbesondere Ester entsprechender aliphatisch gesättigter Monocarbonsäuren und 1 - und/oder mehrfunktionellen Alkoholen der unter a) genannten Art,
c) Ester olefinisch 1- und/oder mehrfach ungesättigter Monocarbonsäuren mit wenigstens 16, insbesondere 16 bis 24 C-Atomen und insbesondere monofunktionellen geradkettigen und/oder verzweigten Alkoholen.

Ausgangsmaterialien für die Gewinnung zahlreicher in diese Unterklassen fallenden Monocarbonsäuren, insbesondere höherer Kohlenstoffzahl, sind pflanzliche und/oder tierische Öle. Genannt seien Kokosöl, Palmkernöl und/oder Babassuöl, insbesondere als Einsatzmaterialien für die Gewinnung von Monocarbonsäuren des überwiegenden Bereichs bis C₁₈ und von im wesentlichen gesättigten Komponenten. Pflanzliche Esteröle, insbesondere für olefinisch 1- und gegebenenfalls mehrfach ungesättigte Carbonsäuren des Bereichs von C₁₆₋₂₄ sind beispielsweise Palmöl, Erdnußöl, Rizinusöl, Sonnenblumenöl und insbesondere Rüböl. Carbonsäuren tierischen Ursprungs dieser Art sind insbesondere entsprechende Gemische aus Talg und/oder Fischölen wie Heringsöl.

### Additive in der Öl-basierten bzw. Wasser-basierten Spülung

Es gelten hier die allgemeinen Gesetzmäßigkeiten für die Zusammensetzung der jeweiligen Behandlungsflüssigkeiten, für die im nachfolgenden anhand entsprechender Bohrspülschlämme beispielhafte Angaben gemacht werden.

Invert-Bohrspülschlämme enthalten üblicherweise zusammen mit der geschlossenen Ölphase die feindisperse wäßrige Phase in Mengen von etwa 5 bis 45 Gew.-% und vorzugsweise in Mengen von etwa 5 bis 25 Gew.-%.

Für die Rheologie bevorzugter Invert-Bohrspülungen im Sinne der Erfindung gelten die folgenden rheologischen Daten: Plastische Viskosität (PV) im Bereich von etwa 10 bis 60 mPas, bevorzugt von etwa 15 bis 40 mPas, Fließgrenze (Yield Point YP) im Bereich von etwa 5 bis 40 lb/100 ft², bevorzugt von etwa 10 bis 25 lb/100 ft² - jeweils bestimmt bei 50 °C. Für die Bestimmung dieser Parameter, für die dabei eingesetzten Meßmethoden sowie für die im übrigen übliche Zusammensetzung der hier beschriebenen Invert-Bohrspülungen gelten im einzelnen die Angaben des Standes der Technik, die eingangs zitiert wurden und ausführlich beispielsweise beschrieben sind in dem Handbuch "Manual Of Drilling Fluids Technology" der Firma NL-Baroid, London, GB, dort insbesondere unter Kapitel "Mud Testing - Tools and Techniques" sowie "Oil Mud Technology", das der interessierten Fachwelt frei zugänglich ist.

In Emulsionsspülungen liegt die disperse Ölphase üblicherweise in Mengen von wenigstens etwa 1 bis 2 Gew.-%, häufig in Mengen von wenigstens etwa 5 Gew.-%, vorzugsweise in Mengen von wenigstens etwa 7 bis 8 Gew.-% im Rahmen einer O/W-Emulsion vor. Der Ölanteil sollte hier vorzugsweise nicht mehr als etwa 50 Gew.-% und insbesondere nicht mehr als etwa 40 Gew.-% ausmachen - Gew.-% jeweils bezogen auf die Summe der unbeschwerten Flüssiganteile Öl/Wasser.

Neben dem Wassergehalt kommen alle für vergleichbare Spülungstypen vorgesehene Additive in Betracht, deren Zusatz in üblicher Weise mit einem ganz bestimmt angestrebten Eigenschaftsbild der Bohrspülung verbunden ist. Die Additive können wasserlöslich, öllöslich und/oder wasser- bzw. öl-dispergierbar sein.

Klassische Additive können sein: Emulgatoren, fluid-loss-Additive, Strukturviskosität aufbauende lösliche und/oder unlösliche Stoffe, Alkalireserven, Mittel zur Inhibierung des unerwünschten Wasseraustausches zwischen erbohrten Formationen - z. B Wasserquellbare Tone und/oder Salzschichten - und der z. B. Wasserbasierten Spülflüssigkeit, Netzmittel zum besseren Aufziehen der emulgierten Ölphase auf Feststoffoberflachen, z. B. zur Verbesserung der Schmierwirkung, aber auch zur Verbesserung des oleophilen Verschlusses freigelegter Gesteinsformationen, bzw. Gesteinsflächen, Biocide, beispielsweise zur Hemmung des bakteriellen Befalls von O/W-Emulsionen und dergleichen. Im einzelnen ist hier auf den einschlägigen Stand der Technik zu verweisen, wie er beispielsweise in der eingangs zitierten Fachliteratur ausführlich beschrieben wird, siehe hierzu insbesondere Gray und Darley, aao., Kapitel 11, "Drilling Fluid Components". Nur auszugsweise sei dementsprechend zitiert:
Feindisperse Zusatzstoffe zur Eröhung der Spülungsdichte: Weit verbreitet ist das Bariumsulfat (Baryt), aber auch Calciumcabonat (Calcit) oder das Mischcarbonat von Calcium und Magnesium (Dolomit) finden Verwendung.

Mittel zum Aufbau der Strukturviskosität, die gleichzeitig auch als fluid-loss-Additive wirken: In erster Linie ist hier Bentonit bzw. hydrophobierter Bentonit zu nennen. Für Salzwasserspülungen kommt anderen vergleichbaren Tonen, insbesondere Attapulgit und Sepiolith in der Praxis beträchtliche Bedeutung zu.

Auch der Mitverwendung organischer Polymerverbindungen natürlichen und/oder synthetischen Ursprungs kann beträichtliche Bedeutung in diesem Zusammenhang zukommen. Zu nennen sind hier insbesondere Stärke oder chemisch modifizierte Stärken, Cellulosederivate wie Carboxymethylcellulose, Guargum, Synthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation.

Verdünner zur Viskositätsregulierung: Die sogenannten Verdünner können organischer oder anorganischer Natur sein, Beispiele für organische Verdünner sind Tannine und/oder Qebracho-Extrakt. Weitere Beispiele hierfür sind Lignit und Lignitderivate, insbesondere Lignosulfonate. Wie zuvor allerdings angegeben, wird in einer bevorzugten Ausführungsform der Erfindung auf die Mitverwendung toxischer Komponenten gerade hier verzichtet, wobei hier in erster Linie die entsprechenden Salze mit toxischen Schwermetallen wie Chrom und/oder Kupfer zu nennen sind. Ein Beispiel für anorganische Verdünner sind Polyphosphatverbindungen.

Emulgatoren: Hier kommt es entscheidend auf den Spülungstyp an. Für die Praxis brauchbare Emulgatoren zur Ausbildung von W/O-Emulsionen sind insbesondere ausgewählte oleophile Fettsäuresalze, beispielsweise solche auf Basis von Amidoaminverbindungen. Beispiele hierfür werden in der bereits zitierten US-PS 4,374,737 und der dort zitierten Literatur beschrieben.

Zur Herstellung von O/W-Emulsionen werden in an sich bekannter Weise andere Emulgatoren benötigt. Es hat sich allerdings gezeigt, daß eine stabile Dispergierung im Sinne einer O/W-Dispersion sehr viel leichter möglich sein kann, als die entsprechende Dispergierung von reinen Mineralölen, wie sie nach dem Stand der Technik eingesetzt werden. Hier liegt eine erste Erleichterung. Weiterhin ist zu berücksichtigen, daß bei der Mitverwendung von Esterölen durch eine Partialverseifung unter Mitwirkung geeigneter Alkalireserven beim Einsatz längerkettiger Carbonsäureester wirkungsvolle O/W-Emulgatoren nachgebildet werden und damit zur Stabilisierung des Systems beitragen.

Den unerwünschten Wasseraustausch mit beispielsweise Tonen inhibierende Zusatzstoffe: In Betracht kommen hier die aus dem Stand der Technik zu öl- und wasserbasierten Bohrspülungen bekannten Zusatzstoffe. Insbesondere handelt es sich dabei um Halogenide und/oder Carbonate der Alkali- und/oder Erdalkalimetalle, wobei entsprechenden Kaliumsalzen gegebenenfalls in Kombination mit Kalk besondere Bedeutung zukommen kann.

Verwiesen sei beispielsweise auf die entsprechenden Veröffentlichungen in "Petroleum Engineer International"_{,} September 1987, 32 - 40 und "World Oil", November 1983, 93 - 97.

Alkalireserven: In Betracht kommen hier auf das Gesamtverhalten der Spülung abgestimmte anorganische und/oder organische Basen, insbesondere entsprechende basische Salze bzw. Hydroxide von Alkali- und/oder Erdalkalimetallen sowie organische Basen. Art und Menge dieser basischen Komponenten sind dabei in bekannter Weise so gewählt und aufeinander abgestimmt, daß die Bohrlochbehandlungsmittel auf einen pH-Wert im Bereich von etwa neutral bis mäßig-basisch, insbesondere auf den Bereich von etwa 7,5 bis 11 eingestellt sind.

Auf dem Gebiet der organischen Basen ist begrifflich zu unterscheiden zwischen wasserlöslichen organischen Basen - beispielsweise Verbindungen vom Typ des Diethanolamins - und praktisch wasserunlöslichen Basen ausgeprägt oelophilen Charakters, wie sie in der eingangs zitierten älteren Anmeldung der Anmelderin P 39 03 785.1 (D 8543) als Additiv in Invert-Bohrspülschlämmen auf Esteröl-Basis geschildert sind. Gerade die Mitverwendung auch solcher öllöslichen Basen im Rahmen der vorliegenden Erfindung fällt in die neue Lehre. Oleophile Basen dieser Art, die sich insbesondere durch wenigstens einen längeren Kohlenwasserstoffrest mit beispielsweise 8 bis 36 C-Atomen auszeichnen, sind dann allerdings nicht in der wäßrigen Phase sondern in der Ölphase gelöst. Hier kommt diesen basischen Komponenten mehrfache Bedeutung zu. Einerseits können sie unmittelbar als Alkalireserve wirken. Zum anderen verleihen sie dem dispergierten Öltröpfchen einen gewissen positiven Ladungszustand und führen damit zu erhöhter Interaktion mit negativen Flächenladungen, wie sie insbesondere bei hydrophilen und zum lonenaustausch befähigten Tonen anzutreffen sind. Erfindungsgemäß kann damit Einfluß auf die hydrolytische Spaltung und den oleophilen Verschluß wasserreaktiver Gesteinsschichten genommen werden.

Die Menge der jeweils eingesetzten Hilfs- und Zusatzstoffe bewegt sich grundsätzlich im üblichen Rahmen und kann damit der zitierten einschlägigen Literatur entnommen werden.

### Beispiele

In den nachfolgenden Beispielen 1 bis 4 werden unter Einhaltung einer Standardrezeptur für Öl-basierte Bohrspülsysteme vom W/O-Typ entsprechende Bohrspülsysteme zusammengestellt, wobei die geschlossene Ölphase jeweils durch oleophile Kohlensäurediester im Sinne der erfindungsgemäßen Definition gebildet ist. Am ungealterten und am gealterten Material werden die Viskositätskennwerte wie folgt bestimmt:
Messung der Viskosität bei 50 °C in einem Fann-35-Viskosimeter der Fa. Baroid Drilling Fluids Inc.. Es werden in an sich bekannter Weise bestimmt die Plastische Viskosität (PV), die Fließgrenze (YP) sowie die Gelstärke (lb/100 ft²) nach 10 sec. und 10 min.. Bestimmt wird weiterhin der fluid loss-Wert (HTHP).

Die Alterung der jeweiligen Bohrspülung wird durch Behandlung für den Zeitraum von 16 h bei 125 °C im Autoklaven - im sogenannten Roller-oven - vorgenommen.

Die Bohrspülungssysteme werden gemäß der folgenden Grundrezeptur in an sich bekannter Weise zusammengestellt:
230 ml Kohlensäurediester-Öl
26 ml Wasser
6 g organophiler Bentonit (GELTONE der Fa. Baroid Drilling Fluids Inc.)
12 g organophiler Lignit (DURATONE der Fa. Baroid Drilling Fluids Inc.)
2 g Kalk
6 g W/O-Emulgator (EZ-mul der Fa. Baroid Drilling Fluids Inc.)
6 g W/O-Emulgator (INVERMUL NT der Fa. Baroid Drilling Fluids Inc.)
346 g Baryt
9,2 g CaCl₂ x 2 H₂O

### Beispiel 1

Die Ölphase wird durch einen Kohlensäurediester gebildet, dessen Alkoholreste sich von einem Fettalkohol natürlichen Ursprungs des überwiegenden Bereichs C_{12/14} (Handelsprodukt Lorol Spezial der Anmelderin) ableitet. Der entsprechende Kohlensäurediester besitzt eine Viskosität (Brookfield bei 25 °C) von 12 cp. Die am ungealterten und am gealterten Material bestimmten Kennzahlen - wie zuvor angegeben - sind in der nachfolgenden tabellarischen Zusammenfassung aufgeführt.

| | Ungealtertes Material | Gealtertes Material |
|---|---|---|
| Plastische Viskosität (PV) | 56 | 71 |
| Fließgrenze (YP) | 32 | 43 |

| Gelstärke (lb/100 ft²) | | |
|---|---|---|
| 10 sec. | 14 | 18 |
| 10 min. | 30 | 32 |
| HTHP 5 ml | | |

### Beispiel 2

Als geschlossene Ölphase wird ein Kohlensäurediester auf Basis eines 1:1-Gemisches (Gew.-Teile) von Isotridecylalkohol und einem C₁₂₋₁₈-Fettalkoholgemisch (Handelsprodukt Lorol Techn. der Anmelderin) eingesetzt. Die Viskosität des Kohlensäurediestergemisches (Brookfield 25 °C) beträgt 23,5 cp.

Es werden am ungealterten und gealterten Material die folgenden Werte bestimmt:

| | Ungealtertes Material | Gealtertes Material |
|---|---|---|
| Plastische Viskosität (PV) | 74 | 84 |
| Fließgrenze (YP) | 29 | 28 |

| Gelstärke (lb/100 ft²) | | |
|---|---|---|
| 10 sec. | 11 | 11 |
| 10 min. | 22 | 19 |
| HTHP 3 ml | | |

### Beispiel 3

Als geschlossene Ölphase wird hier ein symmtrischer Kohlensäurediester auf Basis von 2-Ethylhexanol als öllöslichem Alkohol eingesetzt. Die Viskosität dieses Esters (Brookfield 25 °C) beträgt 8 cp.

Die am ungealterten und gealterten Material bestimmten Kennzahlen sind die folgenden:

| | Ungealtertes Material | Gealtertes Material |
|---|---|---|
| Plastische Viskosität (PV) | 34 | 30 |
| Fließgrenze (YP) | 8 | 8 |

| Gelstärke (lb/100 ft²) | | |
|---|---|---|
| 10 sec. | 4 | 4 |
| 10 min. | 8 | 7 |
| HTHP 3 ml | | |

### Beispiel 4

In diesem Versuch wird als geschlossene Ölphase ein symmetrischer Kohlensäurediester auf Basis von Isotridecylalkohol als Ölphase verwendet. Die Viskosität (Brookfield 25 °C) des Kohlensäureesteröls beträgt 29 cp.

Es werden die folgenden Werte in der angegebenen Weise bestimmt:

| | Ungealtertes Material | Gealtertes Material |
|---|---|---|
| Plastische Viskosität (PV) | 94 | 100 |
| Fließgrenze (YP) | 32 | 27 |

| Gelstärke (lb/100 ft²) | | |
|---|---|---|
| 10 sec. | 11 | 10 |
| 10 min. | 18 | 15 |
| HTHP 3 ml | | |

### Vergleichsbeispiel A

Zum Vergleich wird in der eingangs angegebenen Rezeptur ein Carbonsäureesteröl als geschlossene Ölphase eingesetzt, das ein Estergemisch aus im wesentlichen gesättigten Fettsäuren auf Basis Palmkern und 2-Ethylhexanol darstellt. Es geht zum weitaus überwiegenden Teil auf C_{12/14}-Fettsäuren zurück und entspricht der folgenden Spezifikation:

| | |
|---|---|
| C₈: | 3,5 bis 4,5 Gew.-% |
| C₁₀: | 3,5 bis 4,5 Gew.-% |
| C₁₂: | 65 bis 70 Gew.-% |
| C₁₄: | 20 bis 24 Gew.-% |
| C₁₆: | ca. 2 Gew.-% |
| C₁₈: | 0,3 bis 1 Gew.-% |

Das Estergemisch liegt als hellgelbe Flüssigkeit mit einem Flammpunkt oberhalb 165 °C und einer Viskosität (Brookfield 20 °C) von 7 bis 9 cp vor.

Die an der ungealterten und der gealterten Spülung bestimmten Kenndaten sind die folgenden:

| | Ungealtertes Material | Gealtertes Material |
|---|---|---|
| Plastische Viskosität (PV) | 34 | 34 |
| Fließgrenze (YP) | 10 | 8 |

| Gelstärke (lb/100 ft²) | | |
|---|---|---|
| 10 sec. | 6 | 5 |
| 10 min. | 10 | 10 |
| HTHP 4 ml | | |

Der Vergleich der Kenndaten unter Einsatz dieses Esteröles - dessen Verwendung Gegenstand der älteren Anmeldung P 38 42 703.6 (D 8524) ist - mit den Kenndaten des Beispiels 3 der vorliegenden Erfindung zeigt nahezu Deckungsgleichheit.

Werden als Ölphase Stoffgemische aus den beiden hier betroffenen Esterölen - Kohlensäurediester gemäß Beispiel 3 und Carbonsäureester gemäß Vergleichsbeispiel A - hergestellt und im Rahmen der eingangs angegebenen Rezeptur eingesetzt und vermessen, so werden bei praktisch beliebigen Mischungsverhältnissen vergleichbare Meßwerte am ungealterten und am gealterten Material bestimmt.

### Beispiele 5 und 6

In den nachfolgenden Beispielen 5 und 6 werden Wasser-basierte Emulsionsspülungen unter Einsatz der oleophilen Kohlensäurediester als disperse Ölphase gemäß der nachfolgenden Arbeitsanleitung hergestellt:
Zunächst wird unter Einsatz von handelsüblichem Bentonit (nicht hydrophobiert) mit Leitungswasser unter Einstellung eines pH-Wertes von 9,2 bis 9,3 mittels Natronlauge eine 6 Gew.-%ige homogenisierte Bentonitaufschlämmung hergestellt.

Ausgehend von dieser vorgequollenen wäßrigen Bentonitphase werden in aufeinanderfolgenden Verfahrensschritten - jeweils unter intensiver Durchmischung - die einzelnen Komponenten der Wasser-basierten Kohlensäurediesteröl-Emulsion gemäß der nachfolgenden Rezeptur eingearbeitet:
350 g 6 Gew.-%ige Bentonitlösung
1,5 g technische Carboxymethylcellulose niedrig-viskos (Relatin U 300 S 9)
35 g Natriumchlorid
70 g Kohlensäurediesteröl
1,7 g Emulgator (Sulf. Rizinusöl "Türkischrot Öl")
219 g Baryt
An den so hergestellten O/W-Emulsionsspülungen werden Viskositätsbestimmungen wie folgt durchgeführt:
Zunächst wird an der Emulsionsspülung bei 50 °C am ungealterten Material die Plastische Viskosität (PV), die Fließgrenze (YP) sowie die Gelstärke nach 10 sec. und nach 10 min. bestimmt.

Anschließend wird die Emulsionsspülung 16 h bei 125 °C im Autoklaven - im sogenannten Roller-oven - gealtert, um den Temperatureinfluß auf die Emulsionsstabilität zu überprüfen. Danach werden erneut die Viskositätswerte bei 50 °C bestimmt.

Im einzelnen gilt:

### Beispiel 5

Als disperse Ölphase wird der Isotridecyl-Kohlensäurediester des Beispiels 4 eingesetzt. Am ungealterten und gealterten Material werden die folgenden Werte bestimmt:

| | Ungealtertes Material | Gealtertes Material |
|---|---|---|
| Plastische Viskosität (PV) | 9 | 14 |
| Fließgrenze (YP) | 38 | 28 |

| Gelstärke (lb/100 ft²) | | |
|---|---|---|
| 10 sec. | 28 | 21 |
| 10 min. | 35 | 47 |

### Beispiel 6

Als disperse Ölphase wird hier das Kohlensäurediestergemisch des Beispiels 2 verarbeitet. Die am ungealterten und gealterten Material bestimmten Werte sind die folgenden:

| | Ungealtertes Material | Gealtertes Material |
|---|---|---|
| Plastische Viskosität (PV) | 11 | 13 |
| Fließgrenze (YP) | 39 | 28 |

| Gelstärke (lb/100 ft²) | | |
|---|---|---|
| 10 sec. | 25 | 20 |
| 10 min. | 34 | 39 |

## Patentansprüche

1. Verwendung von oleophilen Diestern der Kohlensäure mit gleichen oder verschiedenen öllöslichen und ökologisch verträglichen monofunktionellen und gegebenenfalls mehrfunktionellen Alkoholen als Bestandteil von Öl- oder Wasser-basierten Bohrspülungen und anderen fließfähigen Bohrloch-Behandlungsmitteln.

2. Ausführungsform nach Anspruch 1, dadurch gekennzeichnet, daß die oleophilen Kohlensäurediester in der Ölphase von Öl-basierten Spülungen, insbesondere Invertspülungen vom W/O-Typ zum Einsatz kommen und dabei entweder als Zuschlagsstoff in einer Konzentration von wenigstens etwa 5 Gew.-% der geschlossenen Ölphase vorliegen, vorzeigsweise hier aber den wenigstens überwiegenden Teil der Ölphase ausmachen.

3. Ausführungsform nach Anspruch 1, dadurch gekennzeichnet, daß die oleophilen Kohlensäurediester in Wasser-basierten Emulsionsspülungen vom O/W-Typ zum Einsatz kommen, dabei in der dispersen Ölphase vorliegen und dort wenigstens etwa 5 Gew.-% dieser dispersen Phase ausmachen, vorzugsweise aber den wenigstens überwiegenden Anteil dieser Phase bilden.

4. Ausführungsform nach Ansprüchen 1 bis 3, dadurch gekennzeichnet, daß die oleophilen Kohlensäurediester Flammpunkte von wenigstens 80 °C, vorzugsweise von wenigstens etwa 135 °C, aufweisen.

5. Ausführungsform nach Ansprüchen 1 bis 4, dadurch gekennzeichnet, daß bei Raumtemperatur fließfähige Kohlensäurediester eingesetzt werden, wobei die Verwendung von Kohlensäurediestern mit Stock-/Fließpunkten unterhalb 0 °C, vorzugsweise unterhalb etwa - 5 °C bevorzugt sein kann.

6. Ausführungsform nach Ansprüchen 1 bis 5, dadurch gekennzeichnet, daß symmetrische oder gemischte Kohlensäurediester und/oder Mischungen unterschiedlicher Kohlensäurediester eingesetzt werden, die sich wenigstens anteilsweise von ökologisch verträglichen monofunktionellen Alkoholen mit wenigstens 6 C-Atomen, vorzugsweise mit wenigstens 8 C-Atomen ableiten und gegebenenfalls auch Reste von wasser- und/oder öllöslichen mehrwertigen Alkoholen mit vorzugsweise 2 bis 5, insbesondere mit 2 und/oder 3 Hydroxylgruppen einkondensiert enthalten.

7. Ausführungsform nach Ansprüchen 1 bis 6, dadurch gekennzeichnet, daß sich die Alkoholreste von toxikologisch und insbesondere inhalationstoxikologisch unbedenklichen Verbindungen ableiten, wobei Reste monofunktioneller Alkohole mit 8 bis 40 C-Atomen und Reste der gegebenenfalls vorliegenden mehrwertigen Alkohole mit 2 bis 40 C-Atomen bevorzugt sind.

8. Ausführungsform nach Ansprüchen 1 bis 7, dadurch gekennzeichnet, daß beim gemeinsamen Einsatz von monofunktionellen und mehrfunktionellen Alkoholen in den Kohlensäureestern die Reste der mehrfunktionellen Alkohole
- Hydroxyl-terminierte Estergruppen,
- unter Ausbildung von Ethergruppen kettenverlängerte monofunktionelle Alkoholreste und/oder
- Oligo-Kohlensäureester unter Anbindung von wenigstens 2 Hydroxylgruppen in Esterform an unterschiedliche Kohlensäurereste ausbilden.

9. Ausführungsform nach Ansprüchen 1 bis 8, dadurch gekennzeichnet, daß Kohlensäurediester zum Einsatz kommen, deren Alkoholreste frei von aromatischen Molekülbestandteilen sind und die sich insbesondere von geraden und/oder verzweigten, gegebenenfalls ungesättigten Kohlenwasserstoffketten natürlichen und/oder synthetischen Ursprungs ableiten.

10. Ausführungsform nach Ansprüchen 1 bis 9, dadurch gekennzeichnet, daß Kohlensäurediester zusammen mit anderen ökologisch verträglichen wasserunlöslichen Ölen eingesetzt werden, wobei hier entsprechende oleophile Alkohole, Ether und/oder Carbonsäureesteröle bevorzugt sind, deren Esterbildende Alkoholkomponenten sich von mono- und/oder mehrfunktionellen Alkoholen ableiten und dabei die Alkohole vorzugsweise so ausgewählt sind, daß auch im praktischen Einsatz unter partieller Esterverseifung keine toxikologischen, insbesondere keine inhalations-toxikologischen Gefährdungen ausgelöst werden.

11. Ausführungsform nach Ansprüchen 1 bis 10, dadurch gekennzeichnet, daß als mitverwendete Carbonsäureesteröle entsprechende Ester von monofunktionellen Alkoholen natürlichen und/oder synthetischen Ursprungs und ausgeprägt oleophilen Charakters mit vorzugsweise wenigstens 6, insbesondere wenigstens 8 C-Atomen verwendet werden.

12. Ausführungsform nach Ansprüchen 1 bis 11, dadurch gekennzeichnet, daß auch beim Einsatz von Abmischungen der oleophilen Kohlensäurediester mit weiteren löslichen Ölphasen solche Mischungskomponenten eingesetzt werden, daß die Flammpunkte der Ölmischphase bei wenigstens etwa 100 °C und vorzugsweise oberhalb etwa 135 °C liegen.

13. Ausführungsform nach Ansprüchen 1 bis 12, dadurch gekennzeichnet, daß Kohlensäurediester bzw. ihre Abmischungen mit homogen mischbaren, ökologisch verträglichen Ölen eingesetzt werden, die
- im Falle der W/O-Invertspülungen in der geschlossenen Ölphase Erstarrungswerte (Fließ- und Stockpunkt) unterhalb 0 °C, vorzugsweise unterhalb - 5 °C, aufweisen und dabei im Temperaturbereich von 0 bis 5 °C eine Brookfield(RVT)-Viskosität nicht über 55 mPas, vorzugsweise nicht über 45 mPas besitzen
- während im Falle der O/W-Emulsionsspülungen die Ölphase bei 20 °C eine Brookfield(RVT)-Viskosität bis etwa 2 Mio mPas, vorzugsweise bis etwa 1 Mio mPas besitzen kann.

14. Ausführungsform nach Ansprüchen 1 bis 13, dadurch gekennzeichnet, daß die homogene bzw. disperse Ölphase Kohlensäurediester in Abmischung mit Carbonsäureestern aus wenigstens einer der nachfolgenden Unterklassen enthält:
a) Ester aus C₁₋₅-Monocarbonsäuren und 1- und/oder mehrfunktionellen Alkoholen, wobei Reste aus 1-wertigen Alkoholen wenigstens 6, bevorzugt wenigstens 8 C-Atome aufweisen und die mehrwertigen Alkohole bevorzugt 2 bis 6 C-Atome im Molekül besitzen,
b) Ester aus Monocarbonsäuren synthetischen und/oder natürlichen Ursprungs mit 6 bis 16 C-Atomen, insbesondere Ester entsprechender aliphatisch gesättigter Monocarbonsäuren und 1- und/oder mehrfunktionellen Alkoholen der unter a) genannten Art,
c) Ester olefinisch 1 - und/oder mehrfach ungesättigter Monocarbonsäuren mit wenigstens 16, insbesondere 16 bis 24 C-Atomen und insbesondere monofunktionellen geradkettigen und/oder verzweigten Alkoholen.

15. Ausführungsform nach Ansprüchen 1 bis 14, dadurch gekennzeichnet, daß Hilfs- und Zuschlagsstoffe im Rahmen der Öl-basierten bzw. Wasser-basierten Bohrlochbehandlungsmittel mitverwendet werden, die ihrerseits ökologisch und toxikologisch wenigstens weitgehend unbedenklich, beispielsweise frei von löslichen toxischen Schwermetallverbindungen sind.

16. Im Temperaturbereich von 5 bis 20 °C fließ- und pumpfähige Bohrlochbehandlungsmittel, insbesondere Bohrspülungen auf Basis
- entweder einer geschlossenen Ölphase, gewünschtenfalls in Abmischung mit einer beschränkten Menge einer dispersen wäßrigen Phase (W/O-Invert-Typ)
- oder einer dispersen Ölphase in einer geschlossenen wäßrigen Phase (O/W-Emulsions-Typ)
gewünschtenfalls enthaltend gelöste und/oder dispergierte übliche Hilfsstoffe wie Viskositätsbildner, Emulgatoren, fluid-loss-Additive, Netzmittel, feinteilige Beschwerungsstoffe, Salze, Alkalireserven und/oder Biozide, dadurch gekennzeichnet, daß sie in ihrer Ölphase oleophile Kohlensäurediester auf Basis öllöslicher und ökologisch verträglicher monofunktioneller Alkohole und gewünschtenfalls Wasser- und/oder Öl-löslicher mehrwertiger Alkohole enthalten.

17. Bohrlochbehandlungsmittel nach Anspruch 16, dadurch gekennzeichnet, daß in der Ölphase Abmischungen der oleophilen Kohlensäurediester mit ökologisch verträglichen Öl-Mischungskomponenten vorliegen oder daß die Ölphase ausschließlich auf Basis der Kohlensäurediester aufgebaut ist, wobei jeweils symmetrische und/oder gemischte Kohlensäurediester bzw. Mischungen verschiedener Kohlensäurediester vorliegen können.

18. Bohrlochbehandlungsmittel nach Ansprüchen 16 und 17, dadurch gekennzeichnet, daß die Kohlensäurediester auf Basis inhalations-toxikologisch unbedenklicher monofunktioneller Alkohole aufgebaut sind, die wenigstens 6 C-Atome, vorzugsweise 8 bis 40 C-Atome aufweisen, frei von aromatischen Resten und dabei geradkettig und/oder verzweigt sind und gegebenenfalls auch wenigstens anteilsweise ungesättigt sein können, wobei neben den monofunktionellen Alkoholen auch mehrwertige Alkohole mit insbesondere 2 bis 5 Hydroxylgruppen und 2 bis 40 C-Atomen mitverwendet sein können.

19. Bohrlochbehandlungsmittel nach Ansprüchen 16 bis 18, dadurch gekennzeichnet, daß sie oligomere Kohlensäurediester mit vorzugsweise 2 oder 3 vollveresterten Kohlensäureresten im Molekül enthalten.

20. Bohrlochbehandlungsmittel nach Ansprüchen 16 bis 19, dadurch gekennzeichnet, daß sie als ökologisch verträgliche Ölmischungskomponenten Carbonsäureesteröle, oleophile Alkohole und/oder Ether enthalten, wobei die Kohlensäurediester und die Ölmischungskomponenten Flammpunkte oberhalb 80 °C, vorzugsweise oberhalb 135 °C aufweisen.

21. Bohrlochbehandlungsmittel nach Ansprüchen 16 bis 20, dadurch gekennzeichnet, daß bei Mitverwendung von Carbonsäureesterölen als Mischungskomponente die im Carbonsäureesteröl vorliegenden Bestandteile monofunktioneller Alkohole so ausgewählt sind, daß bei einer im Gebrauch partiell auftretenden Esterhydrolyse im praktischen Betrieb inhalations-toxikologisch unbedenkliche Alkohole gebildet werden.

22. Bohrlochbehandlungsmittel nach Ansprüchen 16 bis 21, dadurch gekennzeichnet, daß auch die mitverwendeten üblichen Hilfs- und Zuschlagsstoffe unter dem Kriterium ökologischer Verträglichkeit ausgewählt und beispielsweise frei von löslichen toxischen Schwermetallverbindungen sind.

23. Bohrlochbehandlungsmittel nach Ansprüchen 16 bis 22, dadurch gekennzeichnet, daß sie auf einen pH-Wert im Bereich von etwa neutral bis mäßig-basisch, insbesondere auf den Bereich von etwa 7,5 bis 11 eingestellt sind.

## Claims

1. Use of oleophilic diesters of carbonic acid with identical or different oil-soluble and ecologically compatible monofunctional and optionally polyfunctional alcohols as a component of oil- or water-based drilling fluids and other fluid drill-hole treatment agents.

2. An embodiment according to claim 1, characterized in that the oleophilic carbonic acid diesters are used in the oil phase of oil-based fluids, especially inverted fluids of the W/O type, and therein either are present as an additive in a concentration of at least about 5% by weight of the continuous oil phase, or preferably comprise the at least predominant portion of the oil phase.

3. An embodiment according to claim 1, characterized in that the oleophilic carbonic acid diesters are used in water-based emulsion fluids of the O/W type, are present therin in the dispersed oil phase and therein comprise at least about 5% by weight of said dispersed oil phase, while preferably they comprise the at least predominant portion of the oil phase.

4. An embodiment according to claims 1 to 3, characterized in that the oleophilic carbonic acid diesters exhibiting flash points of at least 80 °C, and preferably of at least about 135 °C.

5. An embodiment according to claims 1 to 4, characterized in that oleophilic carbonic acid diesters are used which are fluid at room temperature, while the use of carbonic acid diesters having setting/pour points of below 0 °C, and preferably of below -5 ° C, may be preferred.

6. An embodiment according to claims 1 to 5, characterized in that symmetric or mixed carbonic acid diesters and/or mixtures of different carbonic acid diesters are employed which at least in part are derived from ecologically compatible monofunctional alcohols having at least 6 carbon atoms, and preferably at least 8 carbon atoms, and optionally also contain moieties of water- and/or oil-soluble polyhydric alcohols having preferably from 2 to 5, and especially 2 and/or 3, hydroxyl groups incorporated by condensation.

7. An embodiment according to claims 1 to 6, characterized in that the alcohol moieties are derived from compounds which are toxicologically acceptable, and especially inhalation-toxicologically acceptable, whereby moieties of monofunctional alcohols having from 8 to 40 carbon atoms and moieties of the optionally present polyhydric alcohols having from 2 to 40 carbon atoms are preferred.

8. An embodiment according to claims 1 to 7, characterized in that in the concomitant use of monofunctional and polyfunctional alcohols in the carbonic acid diesters the moieties of the polyfunctional alcohols form
- hydroxyl-terminated ester moieties,
- chain-extended monofunctional alcohols by way of the formation of ether groups, and/or
- oligo-carbonic acid diesters by the attachment of at least 2 hydroxyl groups in ester form to different carbonic acid moieties.

9. An embodiment according to claims 1 to 8, characterized in that carbonic acid diesters are employed, the alcohol moieties of which are free from aromatic molecular constituents and which especially are derived from straight-chain and/or branched, optionally unsaturated, hydrocarbon chains of natural and/or synthetic origin.

10. An embodiment according to claims 1 to 9, characterized in that carbonic acid diesters are employed in combination with other ecologically compatible water-insoluble oils, while here appropriate oleophilic alcohols, ethers and/or carboxylic acid ester oils are preferred, the ester-forming alcohol component of which is derived from mono- and/or polyfunctional alcohols, which alcohols preferably have been selected so that in practical use even upon a partial saponification of the esters no toxicological, especially no inhalation-toxicological endangerment will be induced.

11. An embodiment according to claims 1 to 10, characterized in that as the concomitantly used carboxylic acid ester oils there are used appropriate esters of monofunctional alcohols of natural and/or synthetic origin and of a special oleophilic character and having preferably at least 6 carbon atoms, and especially at least 8 carbon atoms.

12. An embodiment according to claims 1 to 11, characterized in that also in the case of the use of mixtures of the oleophilic carbonic acid diesters with further soluble oil phases there are employed such components to be admixed that the flash point of the mixed oil phase is at least 100 °C, and preferably in excess of about 135 °C.

13. An embodiment according to claims 1 to 12, characterized in that carbonic acid diesters or admixtures thereof with homogeneously miscible ecologically compatible oils are employed which
- in the case of the W/O inverted fluids in the continuous oil phase exhibit solidification values (pour point and setting point) below 0 °C, and preferably below -5 °C and have a Brookfield (RVT) viscosity in the temperature range of from 0 °C to 5 °C of not more than 55 mPa.s, and preferably of not more than 45 mPa.s,
- whereas in the case of the O/W emulsion fluids the oil phase may have a Brookfield (RVT) viscosity at 20 °C of up to about 2,000,000 mPa.s, and preferably of up to about 1,000,000 mPa.s.

14. An embodiment according to claims 1 to 13, characterized in that the homogeneous or dispersed oil phase contains carbonic acid diesters in admixture with carboxylic acid esters from at least one of the following subclasses:
a) Esters of C₁₋₅-monocarboxylic acids and monoand/or polyfunctional alcohols, whereof the moieties of monohydric alcohols comprise at least 6 carbon atoms and preferably at least 8 carbon atoms and the polyhydric alcohols preferably have from 2 to 6 carbon atoms in the molecule,
b) Esters of monocarboxylic acids of synthetic and/or natural origin comprising from 6 to 16 carbon atoms, and more specifically esters of aliphatic saturated monocarboxylic acids and mono- and/or polyfunctional alcohols of the kind mentioned in a),
c) Esters of olefinically mono- and/or polyunsaturated monocarboxylic acids having at least 16, and especially 16 to 24 carbon atoms and especially monofunctional straight-chain and/or branched alcohols.

15. An embodiment according to claims 1 to 14, characterized in that auxiliary and additive materials are concomitantly used within the scope of the oil-based and/or water-based drill-hole treatment agents, which auxiliary and additive materials themselves are at least largely ecologically and toxicologically acceptable, for example, free from soluble toxic heavy metal compounds.

16. Drill-hole treatment agents which are fluid and pumpable within the temperature range of from 5 °C to 20 °C, and more specifically drilling fluids based on
- either a continuous oil phase, if desired in admixture with a limited amount of a dispersed agueous phase (W/O inverted type)
- or a dispersed oil phase in a continuous aqueous phase (O/W emulsion type),
optionally containing dissolved and/or dispersed conventional auxiliary materials such as viscosity builders, emulsifiers, fluid-loss additives, wetting agents, finely divided weighting materials, salts, alkali reserve and/or biocides, characterized in that said drill-hole treatment agents in the oil phase thereof contain oleophilic carbonic acid diesters based on oleophilic and ecologically compatible monofunctional alcohols and optionally water- and/or oil-soluble polyfunctional alcohols.

17. Drill-hole treatment agents according to claim 16, characterized in that in the oil phase there are present mixtures of the oleophilic carbonic acid diesters with ecologically compatible oil mixing components or that the oil phase is exclusively composed of the carbonic acid diesters, whereby in either case symmetrical and/or mixed carbonic acid diesters and/or mixtures of different carbonic acid diesters may be present.

18. Drill-hole treatment agents according to claims 16 and 17, characterized in that the carbonic acid diesters have been composed from monofunctional alcohols which are inhalation-toxicologically acceptable and contain at least 6 carbon atoms, and preferably from 8 to 40 carbon atoms, are free from aromatic molecular constituents and are straight-chain and/or branched and optionally also in part may be unsaturated, whereby in addition to the monofunctional alcohols also polyfunctional alcohols having especially from 2 to 5 hydroxyl groups and from 2 to 40 carbon atoms may have been concomitantly used.

19. Drill-hole treatment agents according to claims 16 to 18, characterized in that they contain oligomeric carbonic acid diesters preferably comprising 2 or 3 completely esterified carbonic acid moieties in the molecule.

20. Drill-hole treatment agents according to claims 16 to 19, characterized in that they contain carboxylic acid ester oils, oleophilic alcohols and/or ethers as ecologically compatible oil mixing components, whereby the carbonic acid diesters and the oil mixing components exhibit flash points above 80 °C, and preferably above 135 °C.

21. Drill-hole treatment agents according to claims 16 to 20, characterized in that in the case of a concomitant use of carboxylic acid ester oils as an admixed component the constituent monofunctional alcohols present in the carboxylic acid ester oil have been selected so that upon a partial hydrolysis of the esters occurring in practical use alcohols will be formed which are inhalation-toxicologically acceptable.

22. Drill-hole treatment agents according to claims 16 to 21, characterized in that also the concomitantly used auxiliary and additive materials have been selected under the criteria of ecological compatibility and, for example, are free from soluble toxicological heavy metal compounds.

23. Drill-hole treatment agents according to claims 16 to 22, characterized in that they have been adjusted to a pH value within the range from about neutral to moderately basic, and especially to the pH range of from about 7.5 to 11.

## Revendications

1. Utilisation de diesters d'acide carbonique Oléophiles avec des alcools unifonctionnels, et le cas échéant plurifonctionnels, identiques ou différents, solubles dans l'huile et compatibles d'un point de vue écologique, comme constituant d'injection de forage basées sur l'huile ou sur l'eau, et d'autres agents de traitement de trous de forage aptes à l'écoulement.

2. Mode d'exécution selon la revendication 1, caractérisé en ce que les diesters d'acide carbonique oléophiles entrent en action dans la phase huileuse d'injections basées sur l'huile, en particulier d'injections inverses du type W/O et en outre se présentent soit comme substance supplémentaire à une concentration au moins d'environ 5 % en poids de la phase huileuse continue, mais de préférence ici, représentent au moins la partie prépondérante de la phase huileuse.

3. Mode d'exécution selon la revendication 1, caractérisé en ce que les diesters d'acide carbonique oléophiles entrent en action dans les injections en émulsion basées sur l'eau du type O/W, se présentent ainsi dans la phase huileuse dispersée et là représentent au moins environ 5 % en poids de cette phase dispersée de préférence cependant la fraction au moins prépondérante de cette phase.

4. Mode d'exécution selon les revendications 1 à 3, caractérisé en ce que les diesters d'acide carbonique oléophiles possèdent dès points de flamme d'au moins 80°C, de préférence au moins d'environ 135°C.

5. Mode d'exécution selon les revendications 1 à 4, caractérisé en ce que des diesters d'acide carbonique aptes à l'écoulement à température ambiante, sont mis en oeuvre, l'utilisation de diesters d'acide carbonique ayant des points dé solidification et d'écoulement en dessous de 0°C, de préférence pouvant être préférés en dessous d'environ -5 C.

6. Mode d'exécution selon les revendications 1 à 5, caractérisé en ce que des diesters d'acide carbonique symétrique sou mixtes et/ou des mélanges de différents diesters d'acide carbonique sont mis en oeuvre, qui dérivent au moins partiellement d'alcools unifonctionnels compatibles écologiquement ayant au moins 6 atomes de carbone, de préférence ayant au moins 8 atomes de carbone, et le cas échéant contiennent aussi des restes d'alcools plurivalents soluoles dans l'eau et/ou l'huile ayant de préférence de 2 à 5, en particulier ayant 2 et/ou 3 groupes hydroxyle, introduits par condensation.

7. Mode d'exécution selon les revendications 1 à 6, caractérisé en ce que les restes alcooliques dérivent de composés inoffensifs sur le plan toxicologique et en particulier sur le plan de la toxicologie par inhalation, parmi lesquels les restes d'alcools unifonctionnels ayant de 8 à 40 atomes de carbone et les restes des alcools plurivalents éventuellement présents ayant de 2 à 40 atomes de carbone sont préférés.

8. Mode d'exécution selon les revendications 1 à 7, caractérisé en ce que par utilisation commune d'alcools unifonctionnels et d'alcools plurifonctionnels dans les esters d'acide carbonique, les restes des alcools plurifonctionnels forment :
- des groupes esters terminés par un hydroxyle
- des restes alcools monofonctionnels prolongés sur la chaîne par formation de groupes éther, et/ou
- des oligoesters d'acide carbonique avec implication d'au moins 2 groupes hydroxyle sous forme d'ester sur des restes d'acide carbonique différents.

9. Mode d'exécution selon les revendications 1 à 8, caractérisé en ce que des diesters d'acide carbonique entrent en action, dont les restes alcooliques sont dépourvus de constituants aromatiques dans la molécule, et qui dérivent en particulier de chaînes hydrocarbonées linéaires et/ou ramifiées, le cas échéant non saturées, d'origine naturelle et/ou synthétique.

10. Mode d'exécution selon les revendications 1 à 9, caractérisé en ce que les diesters d'acide carbonique conjointement avec d'autres huiles insoluoles dans l'eau compatibles d'un point de vue écologique, sont mis en oeuvre, parmi lesquels ici les alcools oléophiles corresponddants, les éthers et/ou les huiles estérifiées par un acide carboxylique sont préférés, alcools dont les composants formant l'ester dérivent d'alcools uni- et/ou plurifonctionnels et en outre les alcools sont choisis de préférence, de sorte qu'aussi dans l'utilisation pratique dans le cas d'une saponification partielle de l'ester, aucun risque toxicologique, particulièrement de toxicité par inhalation ne soit déclenché.

11. Mode d'exécution selon les revendications 1 à 10, caractérisé en ce que comme huile estérifiée par un acide carboxylique utilisée conjointement, on utilise les esters correspondants d'alcools unifonctionnels d'origine naturelle et/ou synthétique et de caractère oléophile marque, ayant de préférence au moins 6 et en particulier au moins 8 atomes de carbone.

12. Mode d'exécution selon les revendications 1 à 11, caractérisé en ce que lors de l'utilisation de mélanges de diesters d'acide carbonique oléophiles avec d'autres phases huileuses solubles aussi, de tels composants de mélange sont mis en oeuvre et en ce que le point de flamme des phases mixtes huileuses se situe à au moins environ 100°C et de préférence au-dessus d'environ 135°C.

13. Mode d'exécution selon les revendications 1 à 12, caractérisé en ce que des diesters d'acide carbonique ou leurs mélanges avec des huiles miscibles d'une manière homogène, écologiquement compatibles sont mis en oeuvre, qui :
- dans le cas d'injections inverses W/O dans la phase huileuse continue, manifestent des points de solidification (point d'écoulement et point de solidification) en dessous de 0°C, de préférence en dessous de -5°C et pour cela possèdent dans la plage de température allant de 0 à 5°C une viscosité Brookfield (RVT) qui n'est pas supérieure à 55 mPa.s, de préférence pas supérieure à 45 mPa.s.
- alors que dans le cas d'injections en émulsion O/W, la phase huileuse peut posséder à 20°C une viscosité Brookfield (RVT) allant jusqu'à 2 millions de mPa.s, de préférence jusqu'à environ 1 million de mPa.s.

14. Mode d'exécution selon les revendications 1 à 13, Caractérisé en ce que la phase huileuse homogène ou dispersée renferme des diesters d'acide carbonique en mélange avec des esters d'acide carboxylique provenant au moins d'une des sous-classes suivantes :
a) des esters d'acide monocarboxylique en C₁-C₅ et d'alcools uni et/ou plurifonctionnels, dans lesquels les restes d'alcools univalents possèdent au moins 6, de préférence au moins 8 atomes de carbone et les alcools plurivalents possèdent de préférence de 2 à 6 atomes de carbone dans la molécule.
b) des esters d'acides monocarboxyliques synthétiques et/ou d'origine naturelle, ayant de 6 à 16 atomes de carbone, en particulier des esters d'acides mono carboxyliques saturés aliphatiques correspondants et d'alcools uni et/ou plurifonctionnels du type mentionné sous a).
c) des esters d'acides monocarboxyliques uni- et/ou plusieurs fois non saturés, avec au moins 16, en particulier de 16 à 24 atomes de carbone et en particulier des alcools monofonctionnels à chaîne droite et/ou ramifiée

15. Mode d'exécution selon les revendications 1 à 14, caractérisé en ce que l'on utilise conjointement des substances auxiliaires et des substances supplémentaires dans le cadre des agents de traitement des trous de forage basés sur l'huile ou basés sur l'eau, qui de leur côté sont inoffensifs au moins largement d'un point de vue toxicologique et écologique, par exemple sont dépourvus de dérivés de métaux lourds toxiques, solubles.

16. Agents de traitement de trous de sondage aptes à l'écoulement et au pompage dans la plage de températures de 5 à 20°C en particulier injections de forage à base de :
- soit une phase huileuse continue, si désiré en mélange avec une quantité limitée d'une phase aqueuse dispersée (type inverse W/O).
- soit une phase huileuse dispersée dans une phase aqueuse continue (émulsion du type O/W).
contenant si désiré dissoutes et/ou dispersées des substances auxiliaires usuelles code des agents de formation de la viscosité, des agents émulsionnants, des additifs de perte de fluide, des agents mouillants, des substances finement dispersées d'épaississement, des sels, des réserves d'alcalis et/ou des biocides, caractérisés en ce qu'ils renferment dans leur phase huileuse des diesters d'acide carbonique oléophiles à base d'alcools unifonctionnels solubles dans l'huile et écologiquement compatibles et si désiré des alcools plurivalents solubles dans l'eau et/ou dans l'huile.

17. Agents de traitement de trous de sondage selon la revendication 16, caractérisés en ce que dans la phase huileuse des mélanges de diesters d'acide carbonique oléophiles avec des composants de mélanges d'huile écologiquement compatibles sont présents ou en ce que la phase huileuse est constituée exclusivement à base de diesters d'acide carbonique, parmi lesquels respectivement des diesters d'acide carbonique symétriques et/ou mixtes ou des mélanges de différents diesters d'acide carbonique peuvent être présents.

18. Agents de traitement de trous de sondage selon les revendications 16 à 17, caractérisés en ce que les diesters d'acide carbonique sont constitués à base d'alcools unifonctionnels inoffensifs du point de vue toxicité par inhalation, qui possèdent au moins 6 atomes de carbone, de préférence de 8 à 40 atomes de carbone, qui sont dépourvus de restes aromatiques et pour cela sont à chaîne droite et/ou ramifiés et le cas échéant peuvent être non saturés au moins partiellement, tandis que à côté des alcools unifonctionnels aussi des alcools plurivalents ayant en particulier de 2 à 5 groupes hydroxyle et de 2 à 40 atomes de carbone peuvent être utilisés conjointement.

19. Agents de traitement de trous de sondage selon les revendications 16 à 18, caractérisés en ce qu'ils renferment des diesters d'acide carbonique oligomères ayant de préférence 2 ou 3 restes d'acide carbonique totalement estérifiés dans la molécule.

20. Agents de traitement de trous de sondage selon les revendications 16 à 19, caractérisés en ce qu'ils renferment comme composants de mélange d'huiles compatibles écologiquement, des huiles d'esters carboxyliques, des alcools oléophiles et/ou des éthers, parmi lesquels le diester d'acide carbonique et les composants de mélange d'huile possèdent des points de flamme au-dessus de 80°C, de préférence au-dessus de 135°C.

21. Agents de traitement des trous de sondage selon les revendications 16 à 20, caractérisés en ce que lors de l'utilisation conjointe d'huiles d'esters d'acide carboxylique comme composants du mélange, les constituants présents dans l'huile d'ester d'acide carboxylique, les alcools unifonctionnels, sont choisis de façon que dans une hydrolyse d'ester qui intervient partiellement dans l'utilisation des alcools inoffensifs du point de vue toxicologie d'inhalation sont formés en fonctionnement pratique.

22. Agents de traitement de trous de sondage selon les revendications 16 à 21, caractérisés en ce que les substances auxiliaires et les substances supplémentaires habituelles utilisées conjointement sont choisies également selon le critère de la compatibilité écologique et par exemple sont dépourvus de dérivés de métaux lourd, toxiques, solubles.

23. Agents de traitement de trous de sondage selon les revendications 16 à 22, caractérisés en ce qu'ils sont ajustés à une valeur de pH dans la zone allant environ de neutre à modérément basique, en particulier dans une zone d'environ 7,5 à 11.
